# EUROPEAN PATENT APPLICATION

(11) **EP 0 560 737 A2**
(43) Date of publication of application: **15.09.1993**
(21) Application number: 93830076.1
(22) Date of filing: 25.02.1993
(51) Int. Cl.: G05D 23/13

(54) **Hot and cold water mixer valve with thermostatic regulator**

(30) Priority: 10.03.1992 IT BS920025
(71) Applicant: GALATRON S.r.l., I-46043 Castiglione d/Stiviere (Mantova) (IT)
(72) Inventor: Orlandi, Alessio, I-46043 Castiglione D/Stiviere, Mantova (IT)
(74) Representative: Manzoni, Alessandro

(57) **Abstract**

This invention relates to a hot and cold water mixer valve with thermostatic regulation which comprises a valve body (11) containing valve means formed of ceramic discs (17,18,19) and having a structure and external dimensions, water inlet and outlet passages and a manner of fastening by means of a standard mixer valve with ceramic discs, and incorporates a thermostatic unit (23) which is contiguous to the valve means and which can participate directly or indirectly in regulating said ceramic discs for the opening/closing of the valve.

## Description

The present invention concerns hot and cold water mixer faucets for water sanitation units, and pertains in particular to a mixer valve with ceramic discs incorporating a thermostatic regulator.

On the one hand, mixer valves which incorporate a group of valves with discs which are ceramic and can be inserted like a cartridge into the body of a faucet for regulating the supply of hot, cold and mixed water through the shifting of a movable disc on another immovable disc are known from the current state of the art. The immovable and movable discs usually have hot and cold water inlet passages, a mixing chamber and a water outlet passage towards the mouth of the faucet.

On the other hand, various types of hot and cold water mixer faucets incorporating a thermostatic regulator are known. The function of this thermostatic regulator, which is positioned and is normally regulated by means of a handle, is to interact with a slider suitable for varying the hot and cold water inlet openings so as to change the mixing ratio of the two types of water as a function of the desired temperature for the fluid supplied.

The scope of the present invention is to provide a mixer valve with a thermostatic regulator which can be interchanged with the usual, standard mixer valves with ceramic discs. In fact, the valve proposed here, with regard to the body containing the ceramic discs and in which the water flows, maintains the same dimensions, the same structure, the same water inlet and outlet passages and the same manner of fastening by means of a standard mixer valve with the addition of a top piece, in which are provided the regulation means of the thermostatic group. In this manner and advantageously, it will be possible at any time and without changes to substitute a standard mixer valve with the thermostatic valve of the present invention with relevant advantages with regard to the regulation of the temperature of the water supplied.

Another scope of the present invention is to provide a thermostatic mixer valve in which the thermosensitive component of the thermostatic regulator is also used as an element for the control of the group of valves with ceramic discs. In practice, the thermosensitive component is in line and flush with the driving shaft of these ceramic discs, such that it is possible to simplify the entire structure of the thermostatic valve, to make it more compact to be able to substitute it with standard mixer valves and to be able to use a single control for the group of valves and the thermostatic component In addition, the presence of a group of valves with ceramic discs eliminates the necessity of using a nonreturn valve since this group is in itself sufficient to ensure any tightness in closing.

Afurther scope of the present invention is to provide a mixer valve with thermostatic regulator in which the thermosensitive component is placed adjacent to the ceramic discs and is influenced by the water next to the outlet of the valve and not by the water in the inlet. This advantageously makes it possible to better manage and regulate the temperature of the water supplied without having to take into account the temperature and the possible variations in temperature of the hot and cold water in the inlet.

Therefore, the present invention is applied to a hot and cold water mixer valve with thermostatic regulator according to claim 1.

However, greater details of the present invention will become more evident from the description below with reference to the attached drawings which are indicative and nonlimiting, in which:
Figure 1 shows the external view of a thermostatic faucet according to the present invention;
Figure 2 shows an axial section of the faucet;
Figure 3 shows a transverse section according to the arrows III-III in Figure 2; and
Figures 4, 5 and 6 show the sectional view of the ceramic discs used in the faucet.

In the said drawing, the body of a faucet, in which the thermostatic mixer valve of the present invention is inserted, is indicated as 10. This valve comprises a body 11 having the dimensions and the outer configuration of the cartridge body of a standard mixer valve with ceramic discs. The body 11 can thus be inserted into the faucet body 10 and is attached by means of a threaded lock nut 12 in the same manner as a standard mixer valve with cartridge.

The valve body 11 has an inserted bottom 13 provided with reference and centering feet 14 on the inside of the faucet body 10 and with tightness seals 15 between the two bodies 10, 11. The valve body 11 contains, between its bottom 13 and a shoulder on the upper part of the bottom, a group of valves with ceramic discs, a group consisting of a lower, immovable disc 17 on the bottom 13, an upper, immovable disc 18 against the shoulder 16 and an intermediate, rotating disc 19. In the wall of the valve body 11, from the said shoulder 16, are provided a first duct 20 and a second duct 21 which communicate together with a central chamber 22 axially to the valve body and opened towards the lower part, that is, towards the bottom 13. More precisely, the first duct 20 communicates with the central chamber 22 through at least one radial opening 22a placed above with respect to at least one other radial opening 21a which places the second duct 21 into communication with the central chamber 22.

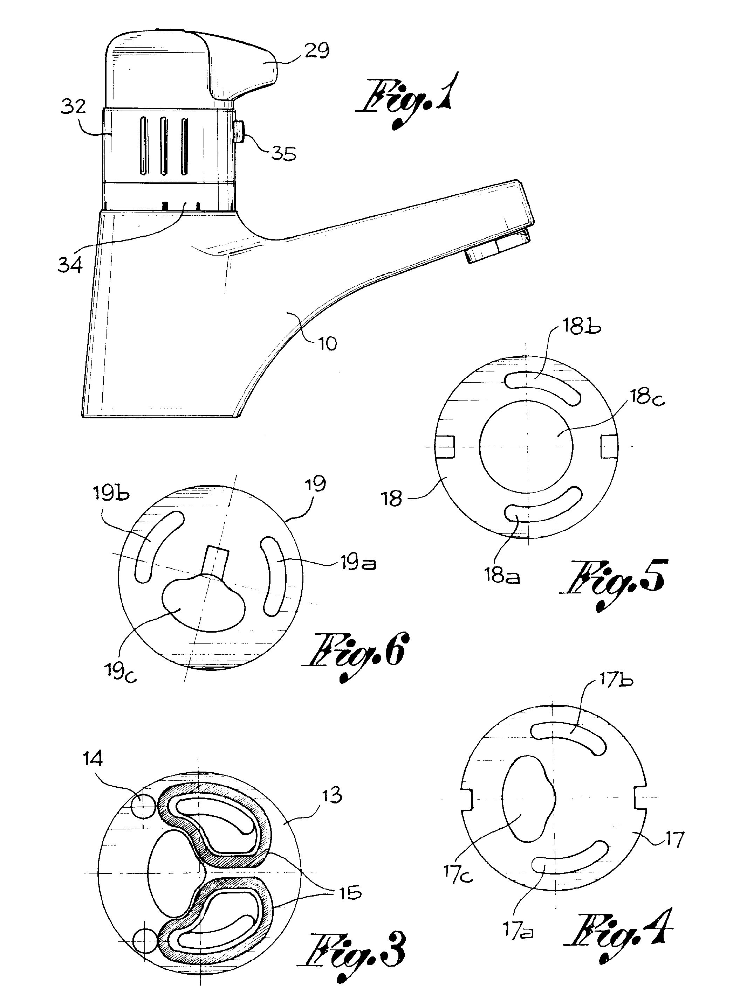

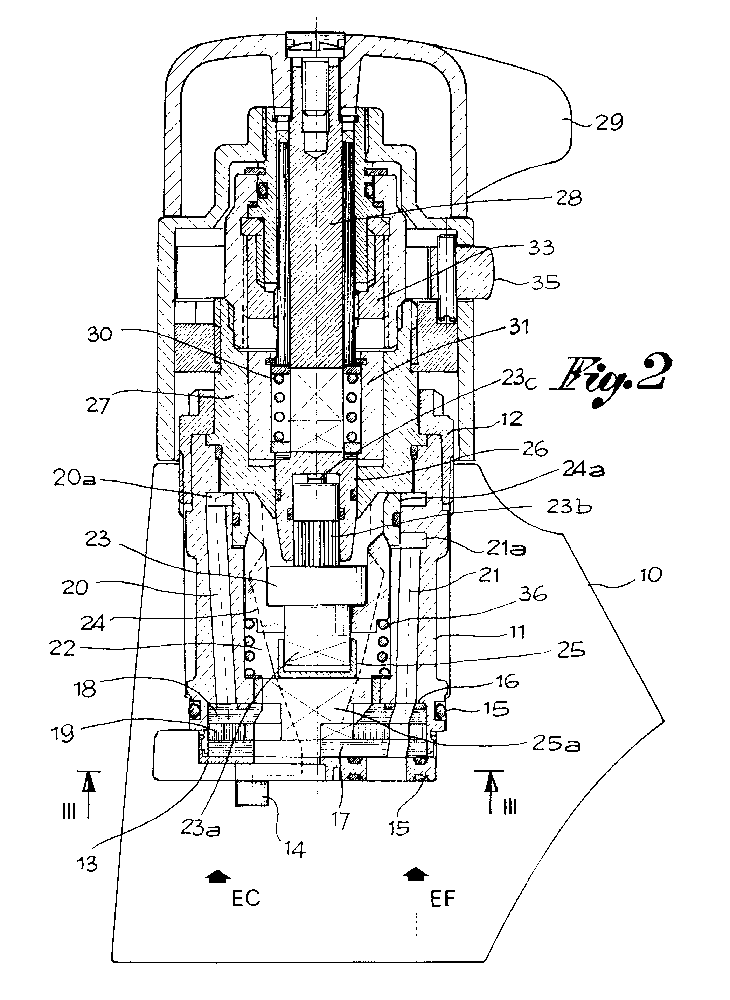

The lower, immovable disc 17 of the group of valves -- cf. Figure 4 -- has two arched passages 17a, 17b with a separate inlet for hot and cold water, coming from the supply system, in the direction of the arrows EC and EF in Figure 2, by means of ducts connected to the bottom 13, and a passage 17c, in line with the central chamber 22 and intended for the outlet of the water towards the mouth h of the faucet body 10.

The upper, immovable disc 18 -- cf. Figure 5 -has two arched passages 18a, 18b and a central hole 18c. Said two passages 18a, 18b are aligned with the passages 17a, 17b, respectively, of the lower disc 17 and coincide with the first duct 20 and the second duct 21, respectively, of the valve body 11, while said central hole 18c is aligned with the central chamber 22 of said body.

The intermediate, rotating disc 19 -- cf. Figure 6 -- also has two arched passages 19a, 19b and a central passage 19c. As a result of the rotation of the intermediate disc 19, the two passages 19a, 19b can be positioned at a distance or in partial or total correspondence with the corresponding passages 17a, 18a; 17b, 18b of the two immovable 17, 18 for the passage of the water to the two ducts 20, 21, and therefore, in order to regulate, correspondingly, the complete closing and the partial or total opening of the valve.

The two ducts 20 and 21 are intended for the passing through of the hot water EC and of the cold water EF, respectively, water which passes into the chamber 22 through the radial openings 20a, 21a in order to be mixed together arid exit towards the supply mouth of the faucet through the central coinciding passages 17c, 18c, 19c of said disc 17, 18, 19.

In the central chamber 22 of the valve body 11 is provided a thermostatic unit 23 which, in addition to the function of thermosensitive component, also participates in the control of the intermediate, rotating disc 19 for the opening and closing of the valve.

The thermostatic unit 23 is supported by, and rotates in, a small cage 24 which axially slides in said chamber 22 and has an annular portion 24a, positioned level with and facing the radial openings 20a, 21a which place the ducts 20, 21 in communication with the chamber 22. A lower part 23a of the thermostatic unit 23 is fit flush in rotation, but axially sliding, in a dragger 25 which is mounted and rotates in the chamber 22 above the immovable disc 18 and which has a shank bound to the intermediate disc 19 for the rotation of the latter [intermediate disc]. Both the small cage and the dragger element are finned for the passage of the water towards the outlet of the valve.

An upper part 23b of the thermosensitive unit 23 is bound to a drag bushing 26 rotatingly mounted in a component 27 screwed into the upper part of the valve body 11 and acting as a coverfor this body. For its rotation, the drag bushing 26 is connected to a control shaft 28, which is rotatingly mounted, by means of interposed means, in said component acting as cover 27 and provided with a driving handle 29.

It is noted that the thermostatic unit has a heat sensor 23 c which rests against the drag bushing 26, and that this bushing is pushed in the direction of the thermostatic unit 23 by a calibration spring 30, which is positioned in a spring-holder 31 mounted in the cover component of the valve body. In order to be above the faucet body - cf. Figure 1 -- around said cover 27 is provided a regulating handle 32 which makes it possible to set the temperature of the water supplied through the means, which are commonly called small valves 33 and are positioned around the control shaft 28, with reference to an associated graduated scale 34 and with the aid of a positioning button 35.

However, the whole unit is such that the rotation of the drag bushing 26, thus the rotation of the thermostatic unit 23 and, through this, the rotation of the dragger 25 and therefore of the rotating disc 18 of the group of valves for the opening/closing of the water passages, corresponds to the rotation of the control shaft 28 by means of the handle 29. However, the thermostatic unit 23 and the small cage 24 which supports it can be shifted axially independently of the bushing 26 and of the dragger25, with these shiftings being opposed by a spring 36 positioned between the small cage 24 and a bearing surface provided in the chamber 22 of the valve body.

The shiftings of the small cage and therefore of the annular portion 24a that is made in one piece with it make it possible to change the openings of the radial openings 20a, 21 a in order to completely or partially close them by means of which the water flows in the inlet in the chamber 22 of the valve body are regulated. On the other hand, the heat sensor 23c of the thermostatic unit 23 which rests against the drag bushing 26 is susceptible to positive and negative expansions as a function of the temperature of the water passing into the chamber 22.

This expansion of the heat sensor determines an automatic shifting of the thermostatic unit and thus of the small cage in the sense of stably maintaining the desired mixing conditions, especially the temperature of the water supplied.

Therefore, with the rotation of the driving handle 29, the opening/closing of the valve is substantially determined through the coaxial kinematic mechanism consisting of the control shaft 28, the drag bushing 26, the thermostatic unit 23, the dragger 25 and the movable disc 19, while with the rotation and the positioning of the handle 32, it is possible to set the temperature of the water to be supplied through the faucet. In fact, with the rotation of this handle, the repositioning of the bushing and of the small cage with respect to the water inlet passages into the chamber of the valve body is determined through the small valve.

However, this regulation may be performed in another :appropriate manner by experts in the field.

It is essential that the thermostatic valve described here be interchangeable with the standard mixer valves so as to be able to provide any mixer faucet with a thermostatic valve, that the thermostatic unit participates in the control of the opening/closing of the group of valves, and that this thermostatic unit is positioned adjacent to the outlet of the water.

In a structural variant, the thermostatic unit may be axially hollow and the control shaft or the drag bushing may be extended into said unit in order to be bound to the dragger or directly to the rotating disc.

## Claims

1. Hot and cold water mixer valve with thermostatic regulation characterized by a valve body (11) containing a group of valves with ceramic discs (17, 18, 19) and having a structure and external dimensions, water inlet and outlet passages and a manner of fastening by means of a standard mixer valve with ceramic discs, for insertion into a faucet body (10) interchangeably with such a standard mixer valve, and in that it incorporates a thermostatic unit (23) which is contiguous to the group of valves and which can participate directly or indirectly in regulating said group of valves for the opening/closing of the valve.

2. Mixer valve with thermostatic regulation according to claim 1, in which the group of valves consists of two immovable ceramic discs (17,18) and one movable disc (19), which is positioned and rotates between the two immovable discs, and in which said discs (17, 18, 19) each have separate inlet passages for hot and cold water and a water outlet passage towards the mouth of the faucet body, the movable disc rotating for the opening/closing of the water inlet passages, characterized in that the valve body (11) has, in its wall, two ducts (20,21) in line with the hot and cold water inlet passages of said discs (17,18), and in the center, a chamber (22), which is open towards and communicates with the water outlet passage of said discs (17,18,19), said ducts (20,21) communicating with the said chamber (22) through radial openings (20a, 21a) at different levels, in that the thermostatic unit (23) is placed axially to said chamber (22) and can be axially shifted together with a small support cage (24) having an annular portion (24a) level with and movable in front of said radial openings (20a, 21 a), said thermostatic unit (23) having a heat sensor (23c) interacting with an opposite bushing (26) forthe axial shiftings of the thermostatic unit and of said small cage for varying said temperature in order to cause, through the annular portion (24a) of the small cage, the variation of the openings of the said radial openings, with the axial shiftings of the thermostatic unit and of the small cage being opposed by a spring (36).

3. Mixer valve with thermostatic regulation according to claim 2, characterized in that the thermostatic unit (23) is supported and rotates in said small cage (24) and is fit flush in rotation, but axially sliding, on the one hand, with a dragger component (25) which is fit flush with the movable, rotating disc (19), and on the other hand, said opposite bushing (26), the opposite bushing (26) being mounted rotatingly in a cover component (27) applied to the valve body (10) and being flush with the rotating control shaft (28) provided with a driving handle, the rotation of said shaft (28) causing the opening/closing rotation of the movable disc (19) of the group of valves through said opposite bushing (26), said thermostatic unit (23) and said dragger component (25).

4. Mixer valve with thermostatic regulation according to claims 1 and 2, characterized in that said thermostatic unit (23) has an axial hole, in that the opposite bushing (26) has a shank which is extended into said axial hole and at the bottom is fit bush directly or by means of a dragger component (25) with the movable, rotating disc (19) of the group of valves, and in that said opposite bushing (26) is rotatingly mounted in a covercom- ponent (27) applied to the valve body (10) and is fit flush with a rotating control shaft (28) provided with a driving handle (29), the rotation of said shaft (28) causing the opening/closing rotation of the movable disc (19) through said opposite bushing (26) of said dragger (25).

5. Mixer valve with thermostatic regulation according to claims 1 and 2, characterized in that the thermostatic unit (23) and the opposite bushing (26) are axially hollow, and in that a rotating control shaft (28) having a driving handle (29) is extended axially to said bushing and to said thermostatic unit and is fit flush at the bottom directly or through the dragger component (25) with the movable, rotating disc of the group of valves for the regulation of opening/closing.

6. Mixer valve according to any of claims 3 through 5, characterized in that above the valve body and concentrically to the control shaft and to the cover component are provided the means for regulating and calibrating the thermostatic unit and the small cage, said means being adjustable by means of a handle and with reference to a graduation and a positioning button.
